# EUROPÄISCHE PATENTSCHRIFT

(11) **EP 2 917 700 B1**
(45) Veröffentlichungstag und Bekanntmachung des Hinweises auf die Patenterteilung: **23.09.2020**
(21) Anmeldenummer: 13783558.3
(22) Anmeldetag: 28.10.2013
(51) Int. Cl.: G01F 1/58, G01F 15/14

(54) **MAGNETISCH-INDUKTIVES DURCHFLUSSMESSGERÄT UND ANORDNUNG**
MAGNETOINDUCTIVE FLOWMETER AND ARRANGEMENT
DÉBITMÈTRE MAGNÉTO-INDUCTIF ET AGENCEMENT

(30) Priorität: 07.11.2012 DE 102012110665
(43) Veröffentlichungstag der Anmeldung: 16.09.2015
(73) Patentinhaber: Endress+Hauser Flowtec AG, 4153 Reinach (BL) (CH)
(72) Erfinder: SULZER, Thomas, 4058 Basel (CH); BLASER, Kurt, CH-4153 Reinach (CH); GRAF, Oliver, CH-4447 Känerkinden (CH); TSCHAMBSER, Florent, F-68250 Grundolsheim (FR)
(74) Vertreter: Andres, Angelika Maria
(86) Internationale Anmeldenummer: PCT/EP2013/072476
(87) Internationale Veröffentlichungsnummer: WO 2014/072194

(56) Entgegenhaltungen:
- EP-A1- 2 019 294
- DE-A1- 3 545 155
- DE-A1-102006 020 265
- DE-A1-102007 004 826
- DE-A1-102007 029 563
- DE-B3-102005 009 675
- GB-A- 2 333 366

## Beschreibung

Die vorliegende Erfindung betrifft ein magnetisch-induktives Durchflussmessgerät nach dem Oberbegriff der Ansprüche 1, 2, 3 und Anordnung nach dem Oberbegriff des Anspruchs 13

Es sind vielfältige Varianten von magnetisch induktiven Durchflussmessgeräten bekannt, von denen die meisten Varianten auf Gehäuseaufbauten aus Metallblechen bestehen.

Darüber hinaus sind Gehäusevarianten bekannt, welche als Vergussgehäuse oder gewickelte Kunststoffgehäuse. Ein typisches Beispiel für eine derartige Gehäusevariante wird in der DE 103 47 878 A1 beschrieben. Besonders günstig scheint dabei ein sogenannter Vollverguss zu sein, bei welchem sämtliche Elektronikbauteile mit einem Kunststoff vergossen werden, welcher anschließend zugleich das Gehäuse bildet. Dabei kann beispielsweise eine Stützung des Spulensystems erfolgen, wodurch systembedingte Messungenauigkeiten verringert werden. Problematisch bei dieser Gehäusevariante ist, dass die Elektronik durch die Temperatur des Kunststoffes beim Verguss angegriffen werden kann.

Die DE 10 2005 009 675 B3 offenbart eine sogenannte Rohr-in-Rohr Gehäusevariante. Problematisch bei dieser Gehäusevariante sind allerdings das Auftreten systembedingter Messungenauigkeiten. Diese Messungenauigkeiten können einerseits durch eine thermische oder druckbedingte Ausdehnung des Kunststoffrohres erfolgen, wodurch sich der Abstand der Messelektrodes eines magnetisch-induktiven Durchflussmessgerätes ändert. Außerdem kann eine Kunststoffrohrleitung bei Erschütterungen schwingen bzw. vibrieren. Durch die Vibrationen des gesamten Rohrsystems übertragen sich auch Schwingungen auf die Bauteile des magnetisch-induktiven Durchflussmessgerätes, welche sich dadurch ihrer Lage gegenüber ihrem vormontierten Ursprungszustand verändern. Dies Deplatzierung wirkt sich insgesamt negativ auf das Messsignal aus.

Darüber hinaus offenbart die DE 10 2005 009 675 B3 eine flanschlose Konstruktion welche eine sogenannte E-Muffe innerhalb des Messrohres integriert aufweist. Nachteilig daran ist, dass ein Anschlussrohr aufgesteckt und verschmolzen wird. Dabei kann es aufgrund des Durchmesserunterschiedes zwischen dem Innenrohr und dem Messrohr lediglich zu einer Teilbefüllung des Messrohres kommen, sofern die Flüssigkeit nur geringe Strömungsgeschwindigkeiten aufweist. Man spricht in diesem Fall von einem teilgefüllten Rohr. Entsprechende Ausgleichsfunktionen oder konstruktive Maßnahmen, insbesondere eine besondere Sensorgeometrie oder eine besondere Einbaulage sind daher notwendig. Gegebenenfalls muss auch eine sogenannte MSÜ-Elektrode (Messstoffüberwachungselektrode) zur Überwachung des Füllstandes im Rohr zusätzlich eingebracht werden.

Ausgehend von diesem Stand der Technik ist es die Aufgabe der vorliegenden Erfindung eine kostengünstige Gehäusealternative zu bekannten Vergussgehäusevarianten bereitzustellen, welche eine Verringerung systembedingten Messungenauigkeiten ermöglicht.

Die DE 10 2007 004826 A1 offenbart ein ähnliches magnetisch-induktives Durchflussmessgerät, wobei ein Führungsmittel zum Fixieren einer Magnetfelderzeugungseinrichtung vorgesehen ist. Die vorliegende Erfindung löst diese Aufgabe durch ein magnetisch-induktives Durchflussmessgerät mit den Merkmalen der Ansprüche 1 oder 2 oder 3 und eine Anordnung mit den Merkmalen des Anspruchs 13.

Erfindungsgemäß umfasst ein magnetisch-induktives Durchflussmessgerät zumindest ein Messrohr, ein Spulensystem, Messelektroden zum Abgreifen einer induzierten Spannung und ein Kunststoffgehäuse, umfassend zumindest zwei miteinander verschweißte Kunststoff-Formteile, wobei zumindest ein Kunststoff-Formteil einen Gehäusemantel bildet und ein zweites Kunststoff-Formteil einen Gehäusedeckel bildet, welcher Gehäusedeckel das Messrohr umgreift, wobei der Gehäusedeckel scheibenförmig ausgebildet ist und zumindest eine erste Auflagefläche aufweist, zum Abstützen den Spulensystems am Gehäusedeckel.

Durch das Abstützen durch die Auflageflächen erfolgt eine dauerhafte Fixierung des Spulensystems und des Durchflussmessgerätes insgesamt auch bei Erschütterungen und Vibrationen des gesamten Rohrsystems.

Grundsätzlich ist das Gehäuse aus mehreren Formteilen ausgebildet. Beispielsweise kann das Gehäuse aus zwei scheibenförmigen Gehäusedeckeln ausgebildet sein, über welche ein zylindrischer Gehäusemantel gezogen werden kann. Ein weiteres Ausführungsbeispiel kann auch ein Formteil vorsehen, welches bereits einen Gehäusedeckel mit einem Gehäusemantel vereint. Vielfältige weitere Formvarianten sind möglich. Vorteilhafte Ausgestaltungen der Erfindung sind Gegenstand der Unteransprüche.

Erfindungsgemäß umfasst ein magnetisch-induktives Durchflussmessgerät zumindest ein Messrohr, ein Spulensystem, Messelektroden zum Abgreifen einer induzierten Spannung und ein Kunststoffgehäuse, umfassend zumindest zwei miteinander verschweißte Kunststoff-Formteile, wobei zumindest ein Kunststoff-Formteil einen Gehäusemantel bildet und ein zweites Kunststoff-Formteil einen Gehäusedeckel bildet, welcher Gehäusedeckel das Messrohr umgreift, wobei der Gehäusedeckel scheibenförmig ausgebildet ist und zumindest aus einem ersten Kunststoffmaterial gefertigt ist, wobei in den Gehäusedeckel eine Materialverstärkung aus einem zweiten Material eingearbeitet ist.

Durch die Materialverstärkung kann eine druck- und/oder temperaturbedingte Ausdehnung des Messrohres im Bereich der Messelektroden verringert werden, wodurch eine dauerhafte Messgenauigkeit insbesondere im Langzeitbetrieb gewährleistet wird. Vorteilhafte Ausgestaltungen der Erfindung sind Gegenstand der Unteransprüche.

Erfindungsgemäß umfasst ein magnetisch-induktives Durchflussmessgerät, zumindest ein Kunststoffmessrohr, dadurch gekennzeichnet, dass am Außenumfang des Messrohres eine Materialwulst angeordnet ist, in welcher Materialwulst eine Heizvorrichtung vorgesehen ist.

Durch die äußere Anordnung ist ein Aufstecken einer größeren Prozessleitung oder ein Anschluss einer gleichgroßen Prozessleitung unter Verwendung eines Verbindungsrohrstückes möglich. Dadurch kann die Gefahr einer Teilbefüllung des Messrohres bei geringen Fließgeschwindigkeiten verringert werden. Vorteilhafte Ausgestaltungen der Erfindung sind Gegenstand der Unteransprüche.

Es ist von Vorteil, wenn das Spulensystem zumindest einen Polschuh und eine Spule mit einem Spulenkörper und einem nicht näher dargestellten vorzugsweise zylindrischen Spulenkern umfasst und dass das Spulensystem sich an der ersten Auflagefläche über zumindest eines der vorgenannten Bauteile abstützt. Durch die unmittelbare Auflage des Spulensystems auf der Auflagefläche kann eine direkte Fixierung der Spulen erreicht werden.

Das Durchflussmessgerät umfasst zumindest zwei diametral am Messrohr gegenüberstehende Spulensysteme welche über Rückführbleche miteinander verbunden sind und welche Spulensysteme am Gehäusedeckel über die Rückführbleche an einer zweiten Auflagefläche abgestützt sind. Die Stützung der Rückführbleche führt zugleich zu einer umgreifenden Stützung des gesamten Spulensystems sofern die Rückführbleche das Messrohr umgreifen.

Zur kostengünstigen Anbindung des Messrohres an eine Prozessleitung ist das Messrohr als ein flanschloses Kunststoffrohr ausgebildet.

Die zweite Auflagefläche ist als nutförmige Auflagefläche ausgebildet, so dass eine Vorgabe der Einbaugeometrie des Durchflussmessgerätes durch die nutförmige Auflagefläche vorgegeben werden kann.

Es ist von Vorteil, wenn das Rückführbleches an der zweiten Auflagefläche verspannt ist. Dies kann vorzugsweise durch Mittel zum Verspannen des Rückführbleches erfolgen. So kann im Fall einer nutförmigen Auflagefläche ein Verspannen des Rückführbleches innerhalb der Nut durch Spangen, Bügeln, Winkel oder zumindest einen umlaufenden Federring erreicht werden, welche entweder in ein Rückführblech eingeprägt sind oder in der Nut angeordnet werden. Alternativ kann das Rückführblech auch derart ausgeformt werden, dass sich Seiten und Kanten des Rückführbleches in der Nut verkanten. Durch das zusätzliche Verspannen des Rückführbleches wird ein zusätzlicher Halt des Spulensystems am Gehäusedeckel erreicht.

Alternativ oder zusätzlich kann das Rückführbleches gegen Vibrationen am Gehäusemantel abgestützt werden. Hierfür weist das magnetisch-induktive Durchflussmessgerät Mittel auf zum Abstützen. Diese Mittel können Kunststoffdämpfer sein, welche im Leerraum zwischen dem Gehäusemantel und den Rückführblechen angeordnet sind. Auch hierdurch wird der Halt der Bauteile innerhalb des Gehäuses zusätzlich erhöht.

Alternativ oder zusätzlich können Leerräume innerhalb des Kunststoffgehäuses des magnetisch-induktive Durchflussmessgerät mit einer Kunststoffmasse, vorzugsweise einem Kunststoffschaum, gefüllt werden. Durch diese Maßnahme kann der Halt der Bauteile innerhalb des Gehäuses zusätzlich erhöht werden.

Der Spulenkörper kann einen Vorsprung aufweisen, welcher sich an der ersten Auflagefläche des Gehäusedeckels abstützt.

Als Materialverstärkung gegen thermische Verformung des Kunststoffmessrohres und/oder Druckverformung des Kunststoffmessrohres ist ein Metall- oder ein Kunststoffring, vorzugsweise ein Stahlring, in den Gehäusedeckel eingelassen. Dieser kann teilweise in dem Gehäusedeckel freiliegen oder vorzugsweise vollständig und damit korrosionssicher vom Kunststoff des Gehäusedeckels ummantelt sein.

Erfindungsgemäß weist eine Anordnung umfassend ein Rohr einer Prozessleitung, ein Messrohr eines Durchflussmessgerätes, insbesondere nach einem der vorhergehenden Ansprüchen, und ein rohrförmiges Verbindungselement welches sowohl das Rohr der Prozessleitung als auch das Messrohr an dessen Außenumfang umgreift, wobei zwischen dem rohrförmigen Verbindungselement und dem Messrohr ein Heizdraht einer Heizvorrichtung angeordnet ist. Durch diese Anordnung kann eine Verbindung erreicht werden bei welcher das Messrohr und das Rohr der Prozessleitung eine gleiche Nennweite aufweisen. Als Verbindungselement bietet sich idealerweise ein Überrohr an, welches mit dem Rohr der Prozessleitung verschweißvergieß- oder verklebbar ist.

Nachfolgend wird die Erfindung an einem Ausführungsbeispiels anhand der beiliegenden Figuren näher erläutert. Es zeigt:
Fig. 1 schematische Perspektivansicht eines erfindungsgemäßen magnetisch-induktiven Durchflussmessgerätes,
Fig. 2 erste Detailansicht des magnetisch-induktiven Durchflussmessgerätes im geöffneten Zustand,
Fig. 3 zweite Detailansicht des magnetisch-induktiven Durchflussmessgerätes im geöffneten Zustand;
Fig. 4 dritte Detailansicht des magnetisch-induktiven Durchflussmessgerätes im geöffneten Zustand;
Fig. 5 geschnittene Vorderansicht des magnetisch-induktiven Durchflussmessgerätes;
Fig.6 Perspektivansicht eines Anbindungskonzeptes des erfindungsgemäßen magnetisch-induktiven Durchflussmessgerätes; und
Fig.7a-d verschiedene Varianten zur zusätzlichen Festlegung des Rückführbleches des magnetisch-induktiven Durchflussmessgerätes im Gehäuse.

Magnetisch-induktive Durchflussmessgeräte nutzen für die volumetrische Strömungsmessung das Prinzip der elektrodynamischen Induktion aus und sind aus einer Vielzahl von Veröffentlichungen bekannt. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das bezüglich der Koordinate entlang der Messrohrachse in dem Bereich maximaler Magnetfeldstärke angeordnet ist und wo folglich die maximale Messspannung zu erwarten ist. Die Elektroden sind üblicherweise galvanisch mit dem Medium gekoppelt; es sind jedoch auch magnetisch-induktive Durchflussmessgeräte mit berührungslos kapazitiv koppelnden Elektroden bekannt.

Das Messrohr besteht dabei vorzugsweise aus einem elektrisch-isolierenden Material. Das Messrohr besteht je nach Temperatur und Medium beispielsweise aus einem thermoplastischen, einem duroplastischen oder einem elastomeren Kunststoff, vorzugsweise Polyethylen.

Eine Elektrode lässt sich im Wesentlichen in einen Elektrodenkopf, der zumindest teilweise mit einem Medium, welches das Messrohr durchströmt, in Kontakt kommt, und einen Elektrodenschaft, der durch die Wandung des Messrohres nach außen führt.

Die Elektroden sind neben dem Magnetsystem die zentralen Komponenten eines magnetisch-induktiven Durchflussmessgerätes. Bei der Ausgestaltung und Anordnung der Elektroden ist darauf zu achten, dass sie sich möglichst einfach in dem Messrohr montieren lassen und dass nachfolgend im Messbetrieb keine Dichtigkeitsprobleme auftreten; darüber hinaus sollen sich die Elektroden durch eine empfindliche und gleichzeitig störungsarme Messsignalerfassung auszeichnen.

Neben den Messelektroden, die zum Abgriff eines Messsignals dienen, werden oftmals zusätzliche Elektroden in Form von Bezugs- oder Erdungselektroden in das Messrohr eingebaut, die dazu dienen, ein elektrisches Referenzpotential zu messen oder teilgefüllte Messrohre zu erkennen oder die Mediumstemperatur mittels eingebautem Temperaturfühler zu erfassen.

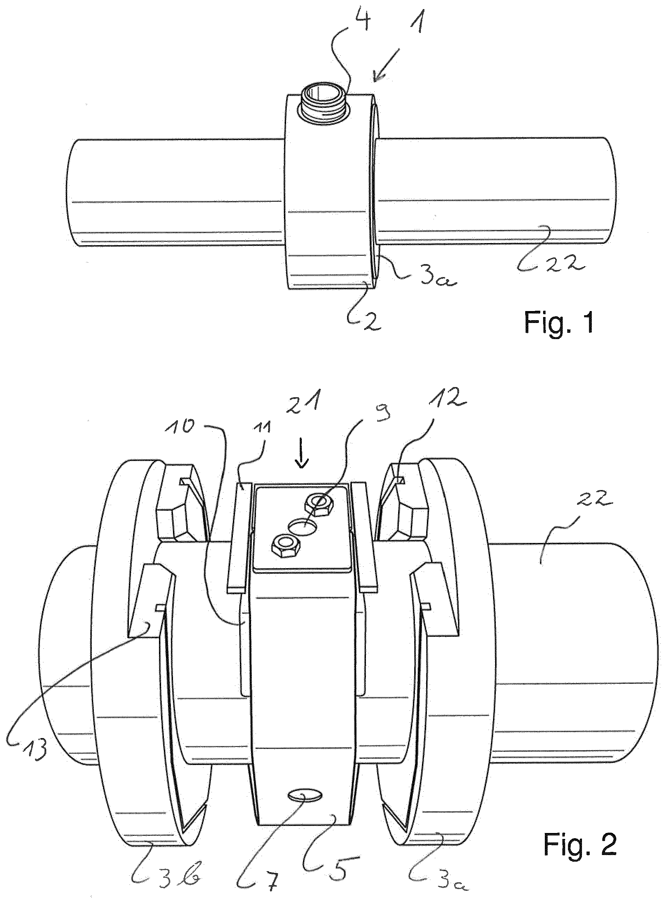

In Fig. 1 ist ein erfindungsgemäßes magnetisch-induktives Durchflussmessgerät mit einem flanschlosen Messrohr 22 aus Kunststoff, insbesondere aus Polyethylen und ein darauf angeordnetes Gehäuse 1 dargestellt. Das Gehäuse 1 schließt das Messsystem 21 wasserdicht ein. Dies ist insbesondere wichtig bei erdvergrabenen Durchflussmessgeräten, welche regelmäßiger Feuchtigkeit ausgesetzt sind. Auch bei Harvarien in Kellerräumen bleibt die Integrität des Messsystems erhalten.

Typische Anwendungsbereiche für derartige Durchflussmessgeräte sind vorzugsweise Wasser/Abwasseranwendungen, der Einsatz in Überflutungsbereichen, erdvergrabene Rohrleitungen, Off- und On-Shore-Anwendungen, Säure/Base-Anwendungen, kommunale Wasser- und Abwasserbetriebe, sowie Bereiche des sogenannten Harsh Environments mit stark-korrosiven Segmenten, hier insbesondere Meerwasserentsalzungsanlagen und landwirtschaftliche Anwendungen, z.B. Gülleaustrag.

Im Folgenden wird das Messsystem im Detail anhand von Fig. 2-4 näher erläutert. Das Messsystem 21 wird im vorliegenden Fall durch zwei Spulensysteme gebildet, welche diametral zueinander am Messrohr 22 angeordnet sind. Die in Fig. 2 abgebildete Spulensysteme bestehen dabei aus einer Spule 8 und einem Polschuh10. Die Spule 8 umfasst einen Spulenkörper 6 und einen vorzugsweise zylindrischen Spulenkern.

Die Spulensysteme sind über Rückführbleche 5 miteinander verbunden. Die Spule 8 besteht vorzugsweise aus Draht, welcher in einer bestimmten Wickelrichtung um einen Spulenkörper 6 gewickelt ist. Der Spulenkörper 6 besteht aus einem Kunststoff und weist einen Vorsprung 11 auf, welcher als Auflage auf dem Gehäusedeckel 3a und/oder 3b dient.

Das Spulensystem und die Rückführbleche 5 können beispielsweise, wie in Fig. 2 dargestellt miteinander verschraubt sein oder alternativ über Rastmechanismen miteinander verbunden sein. Auch andere Befestigungsvarianten sind möglich. Der Gegenstand der Erfindung ist nicht nur auf ein Spulensystem mit jeweils einer Spule 8 begrenzt, sondern es können auch Spulensysteme mit mehreren umfangsverteilten Spulen genutzt werden.

Der Polschuh 10 übernimmt die Führung des durch die Spule 8 erzeugten Magnetfeldes. Der Polschuh 10 ist aus magnetisierbarem Material und in Fig. 2 einstückig dargestellt, er kann allerdings auch aus mehreren Einzelblechen bestehen, so dass Wirbelstromeffekte verringert werden. Die in Fig. 2 dargestellte Ausführungsvariante des Polschuhs 10 ist abgewinkelt. Er weist vorzugsweise einen zentralen Bereich auf, welcher eine erste Ebene vorzugsweise senkrecht zur Oberflächennormalen der Rohrwandung aufweist. Von dieser senkrechten Anordnung kann um bis zu 5° abgewichen werden. Die von dem zentralen Bereich abgewinkelten Bereiche dienen zu einer besseren Führung des Magnetfeldes entlang des Messrohres 22.

Das Rückführblech 5 dient der magnetischen Rückführung und weist, analog zum Polschuh, einen zentralen ebenen Bereich und zwei randseitige abgewinkelte Bereiche auf.

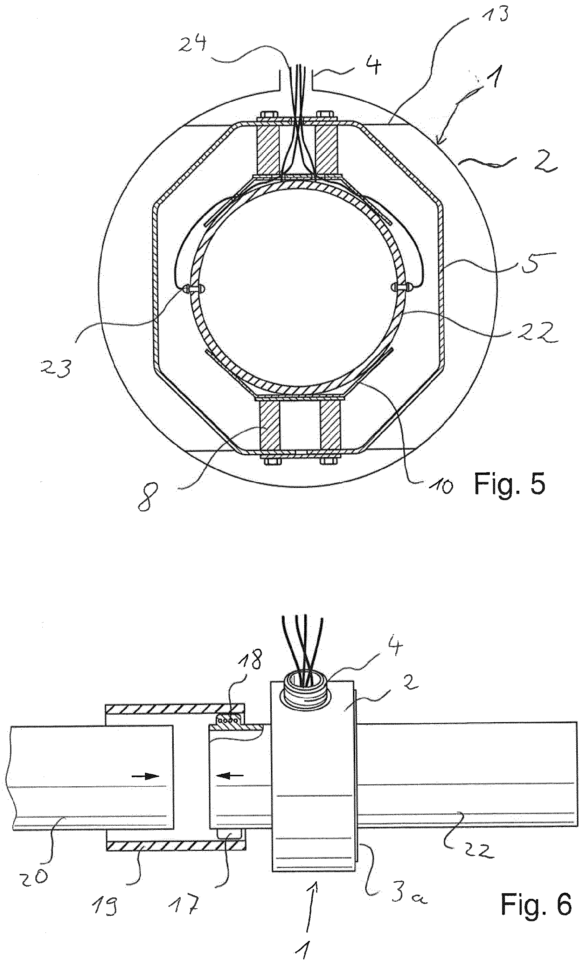

In Fig. 5 sind zudem Messelektroden 23 abgebildet, mit welchen das Messsignal abgegriffen werden kann. Diese sind gegenüber den Spulensystemen entlang der Messrohrwandung um 90° versetzt angeordnet und stehen sich diametral gegenüber. Zur Installation der Elektroden 23 am Messrohr 22 können lediglich optional Löcher 7 in das Rührführblech 5 eingearbeitet sein, durch welche die Elektroden 23 hindurchgeführt und montiert werden können. Die Kabel 24 der Messelektroden 23 werden entlang des Messrohres 22 zum Anschlussstutzen 4 durch eine Durchführung im Spulensystem 9 geleitet. Das Rückführblech 5 kann mehrteilig, beispielsweise zweiteilig aufgebaut sein oder vollumfänglich um das Messrohr 22 verlaufen. Zur Vermeidung von Wirbelströmen kann das Rückführblech 5 mehrlagig aufgebaut sein.

Insgesamt besticht der erfindungsgemäße magnetisch-induktive Durchflussmesser durch seinen modularen Aufbau, welcher eine schnelle und unkomplizierte Installation und ggf. Deinstallation des Messsystems 21 am Messrohr 22 ermöglichen.

Im Unterschied zu bereits bekannten Vergussgehäuse-Durchflussmessgeräten zeichnet sich das erfindungsgemäße magnetisch-induktive Durchflussmessgerät durch einen Gehäuseaufbau aus, welcher das vorgenannte Messsystem vollständig und wasserdicht umschließt und welcher als Steckvariante montierbar ist.

Der Aufbau des Gehäuses 1 ist in Fig. 1-5 näher dargestellt. Das Gehäuse 1 besteht aus einem Gehäusemantel 2 und zwei Gehäusedeckeln 3a und 3b, wobei der Gehäusemantel 2 im vorliegenden Fall als zylindrisches Rohr ausgebildet ist. Selbstverständlich kann der Gehäusemantel weitere Gehäusevarianten umfassen, so z.B. ein sechseckiges Rohr oder dergleichen.

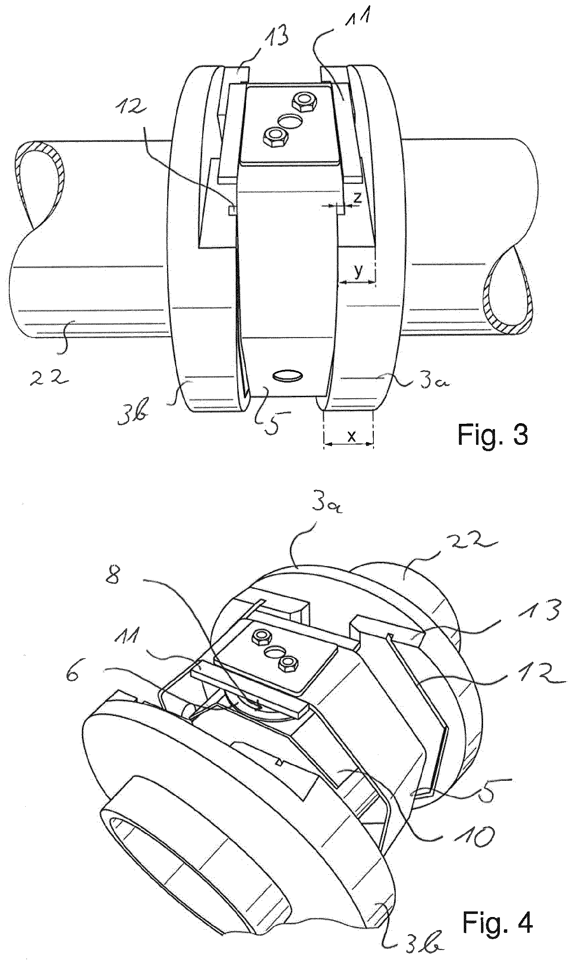

Die Gehäusedeckel 3a und/oder 3b sind als Scheibe ausgebildet und weisen eine zentrale Ausnehmung zur Aufnahme des Messrohres 21 auf. Die Scheibe bzw. der Gehäusedeckel 3a und/oder 3b ist in verschiedenen Bereichen unterschiedlich dick ausgebildet. So weist die Scheiben integrale Aufnahmeflächen 12, 13 zur Aufnahme eines Teils des Messsystems auf. Dies betrifft im Fall von Fig. 3 u.a. nutförmige Aufnahmeflächen 12 zur teilweisen seitlichen Aufnahme der Rückführbleche 5 durch den Gehäusedeckel 3a. Diese nutförmige Aufnahmeflächen 12 bzw. diese Nut ist in Form der Rückführbleche - hier in Form eines bereichsweise ausgebildeten Sechsecks - in das Material des Gehäusedeckels 3a und/oder 3b eingefräst.

Weitere Aufnahmeflächen 13 weist der Gehäusedeckel in den Bereichen der Spulensysteme auf. An dieser ersten Aufnahmefläche kann sich u.a. das Messsystem 21 - hier der Vorsprung 11 des Spulenkörpers abstützen.

Die Aufnahmeflächen 12 und 13 verlaufen dabei parallel zur Messrohrachse und dienen zur dauerhaften Positionierung des Magnetsystems im Rohr.

Ein Kunststoffmessrohr 22 kann sich je nach dem im Messrohr vorherrschendem Druck und Mediumstemperatur ausdehnen, so dass der Abstand der Messelektroden 23 variieren kann, was zu einer Ungenauigkeit des Messsignals führt.

Um dies vorteilhaft zu vermeiden, weist der Gehäusedeckel 3a und 3b eine Materialverstärkung auf. Diese Materialverstärkung ist umlaufend und kann vorzugsweise ein faserverstärktes Material oder ein Metall sein. Bei faserverstärktem Material bietet sich vorzugsweise Aramid- oder Glasfasern an. Bei Metall kann ein Stahlring eingesetzt werden. Dieser sollte idealerweise eine Materialüberdeckung von zumindest 2 mm, insbesondere zumindest 5 mm zu jeder Außenseite des Gehäusedeckels aufweisen, um Korrosionseffekte zu vermeiden.

Der umlaufende Metallring, z.B. aus Stahl, verhindert die Ausdehnung des Gehäusedeckels und damit auch die Ausdehnung des Messrohres zusätzlich begrenzt. Selbstverständlich kann als Materialverstärkung auch ein Kunststoffmaterial mit einer höheren Zugfestigkeit als das Messrohrmaterial idealerweise bei 20°C aufweist, eingesetzt werden.

Eine besonders bevorzugte Materialversteifung wird erreicht sofern die Materialverstärkung umlaufend ist und zumindest eine doppelt so hohe Ringsteifigkeit gegenüber dem Kunststoffmaterial aufweist, aus welchem der Gehäusedeckel 3a oder 3b im Wesentlichen gefertigt ist.

Wie in Fig. 3 dargestellt, handelt es sich bei dem Gehäuse 1 des magnetisch-induktiven Durchflussmessgerätes um einen dreiteiligen Aufbau aus den besagten Gehäusedeckeln 3a, 3b und dem darüber angeordneten Gehäusemantel 2. Alternativ zu diesem Aufbau kann der Gehäusemantel vor der Montage bereits mit einem der Gehäusedeckel bereits verschweißt sein, so dass ein zweiteiliger Aufbau des Gehäuses ohne weiteres möglich ist. Die Verbindung der Gehäusedeckel mit dem Gehäusemantel kann durch gängige Verfahren der Verbindung aus der Kunststofftechnik, z.B. Ultraschall- oder Spiegelverschweißen erfolgen.

Auch ein zweiteiliger Aufbau mit zwei Gehäusehalbschalen ist möglich, welche im Anschluss miteinander durch gängige Verfahren der Verbindung aus der Kunststofftechnik zu einem Gehäuse montiert verbunden werden.

Der Gehäusemantel weist ein Anschlussstück bzw. einen Anschlussstutzen 4 auf, welches eine Verbindung des Durchflussmessgerätes mit einer hier nicht näher dargestellten Auswerteeinheit ermöglicht.

Eine entsprechende Auswerteeinheit zur elektronischen Auswertung der gemessenen Daten ist vorhanden und kann je nach Bautyp, außerhalb, am oder im Gehäuse angeordnet sein. Beispielsweise ist es möglich, die Auswerteeinheit an den Gehäusemantel zu befestigen. Dies kann durch gängige Techniken wie Kunststoffverschweißen, Verguss oder Verkleben erfolgen, wobei die Auswerteeinheit vorzugsweise zum besseren Verschweißen oder Vergießen ebenfalls ein Gehäuse aufweist.

Ein besonderer Vorteil des Durchflussmessgerätes ist seine einfache Montage. Durch die Vorgabe von Formteilen, welche auf bestimmte Messrohr-Nennweiten abgestimmt sind, können die Bauelemente des Durchflussmessgerätes passgenau vorgefertigt werden, so dass die Produktionsgeschwindigkeit nicht vom Verguss und dem anschließenden Aushärten abhängt und bei Bedarf eine hohe Stückzahl fertigbar ist.

Ein beispielhaftes Fertigungsverfahren für das in Fig. 1-5 dargestellte magnetisch-induktive Durchflussmessgerät soll nachfolgend näher erläutert werden.

In einem ersten Fertigungsschritt kann das Messrohr mit zwei diagonal gegenüberstehenden Löchern zur Befestigung der Messelektroden versehen werden.

In einem zweiten Fertigungsschritt werden die Spulensysteme auf das Messrohr aufgesetzt. Dabei werden zunächst die Polbleche um das Messrohr angeordnet, die Spulen auf die Polbleche aufgesetzt und mit diesen verschraubt oder verrastet.

In einem dritten Fertigungsschritt werden die Rückführbleche auf die den Polblechen entgegengesetzten Seiten der Spulenkörper aufgesetzt und mit diesen verschraubt oder verrastet.

In einem Zwischenfertigungsschritt, also zwischen dem ersten und dem dritten Fertigungsschritt oder nach dem dritten Fertigungsschritt, können die Messelektroden in den im Messrohr eingebrachten Löchern angeordnet und befestigt werden.

Alternativ können die Messelektroden bei der Fertigung des Messrohres in dieses eingebracht, z.B. vergossen , werden.

In einem weiteren Zwischenfertigungsschritt werden die Anschlusskabel der Messelektroden am Außenumfang des Messrohres entlanggeführt im Bereich des Spulensystems zusammen mit den Anschlüssen für die Spulen zum Anschlussstutzen hingeführt.

Da sowohl freiliegende als auch erdvergrabene Kunststoffrohre jahreszeitbedingten Temperaturschwankungen zwischen -20 bis 50 °C und anderen Umwelteinflüssen ausgesetzt sind, kann es zu thermischen Verformungen kommen, welche bei einem Verguss aufgrund unterschiedlicher Ausdehnungskoeffizienten von Kunststoff- und Metallbauteilen negativ auf die Elektronik, beispielsweise auf Lötstellen, auswirken können.

Derartige Materialausdehnungen werden bei dem erfindungsgemäßen Durchflussmessgerät und dessen Gehäuseaufbau vorteilhaft vermieden. Folgende Gerätedimensionierungen haben sich als besonders günstig für ein erschütterungsresistentes Gehäuse mit sicherer Positionierung der Bauteile des magnetisch-induktiven Durchflussmessgerätes erwiesen.

Die maximale Scheibendicke x beschreibt die maximale Dicke eines Gehäusedeckels 3a oder 3b, an den Stellen, welche keine Ausfräsungen aufweisen. Die Breiten z und y der nutförmigen Auflagefläche 12 und der ersten Auflagefläche 13 beschreiben wie tief diese Auflageflächen in einer Richtung A, welche parallel zur Messrohrachse verläuft, in den Gehäusedeckel hineinverlaufen.

Die Breite z der nutförmigen Auflagefläche 12 beträgt dabei vorzugsweise minimal zumindest 10%, besonders bevorzugt zumindest ein 15%, der maximalen Scheibendicke x.

Die Breite y der ersten Auflagefläche 13 beträgt vorzugsweise maximal 70%, besonders bevorzugt maximal 60% der maximalen Scheibendicke x.

Die maximale Scheibendicke des Gehäusedeckels 3a oder 3b ist vorzugsweise größer als die Rohrwandstärke des Messrohres 22.

Die Wandstärke des Gehäusemantels 2 beträgt vorzugsweise mehr als ein Drittel, vorzugsweise zumindest die Hälfte der Rohrwandstärke des Messrohres.

Die wasserdichte Verbindung zwischen dem Messrohr, den Gehäusedeckeln, dem Gehäusemantel und des nicht näher dargestellten Transmitters kann durch Vergießen, Verschweißen oder Verkleben erfolgen. Zusätzliche mechanische Festlegungen vor diesen Verbindungen, z.B. durch mechanische Verbindungselemente mittels Schraubverbindungen oder Bajonettverschlüsse können vorteilhaft zur Stabilität der Verguss-, Verschweiß- oder Klebverbindungen beitragen.

Ein weiterer Aspekt der vorliegenden Erfindung ist der flanschlose Grundaufbau des Messrohres des magnetisch-induktiven Durchflussmessgerätes. Dieser ist in Fig. 6 näher erläutert.

Zur Installation eines Durchflussmessrohres an eine mediumsführende Prozessleitung war es bislang üblich die Prozessleitung bei unterbrochenem Mediumsfluss aufzutrennen und über Schweißtechniken oder mittels einer handelsüblichen E-Muffe, einen Flansch, vorzugsweise aus demselben Kunststoff wie die Prozessleitung anzuschweißen oder anderweitig zu befestigen. An diesen Flansch konnte das Messrohr eines magnetisch-induktiven Durchflussmessgerätes über einen messrohrseitigen Flansch, z.B. einen Losflansch, befestigt werden.

Die Anbindung des flanschlosen Messrohres der vorliegenden Erfindung an ein mediumsführendes Prozessrohr kann allerdings in einfacherer und wesentlich materialsparenderer Weise erfolgen.

Hierfür weist das flanschlose Messrohr 22 endständig am Außenumfang des Messrohres eine oder mehrere umlaufende Materialverdickungen bzw. eine Materialwulst 17 auf, in welche eine Heizvorrichtung 18 eingearbeitet ist. Zur Anbindung des Messrohres an ein Prozessrohr 20 kann man das Prozessrohr 20 auf das Messrohr aufstecken und beide Rohre miteinander durch Aufschmelzen der Materialwulst 17 verbinden.

Ganz besondere Vorteile hat es allerdings wenn das Prozessrohr 20 und das Messrohr 22 die gleiche Nennweite aufweisen und miteinander verbunden werden können, derart, dass im montierten Zustand der Übergang zwischen Prozessrohr und Messrohr ohne Nennweitenveränderung erfolgt. Der Innendurchmesser ist somit gleichbleibend konstant. Die Strömung bleibt somit ebenfalls konstant und es kommt zu keiner Wirbelbildung oder zu einer trubulenten Strömung, welche ggf. das Messsignal beeinflussen könnte.

Dabei wir, wie in Fig. 6 gezeigt, das Prozessrohr 20 mit einem Überrohr 19 versehen. Dies kann durch Verschweißen, Vergießen oder Verkleben erfolgen. Im Anschluss wird das Messrohr 22 in das Überrohr 19 einstecken. Im Anschluss kann durch die Heizeinrichtung ein Aufschmelzen der Materialverdickung erfolgen, so dass eine dichte Anbindung zwischen dem Messrohr 22 und dem Überrohr 19 - und damit auch dem Prozessrohr 20 erfolgt. Diese Lösung erfolgt ohne Aufweitung oder Verengung des Strömungsquerschnitts.

Selbstverständlich kann auch zuerst die Verbindung zwischen dem Überrohr und dem Messrohr erfolgen und anschließend das Verbinden mit dem Prozessrohr bzw. der Prozessleitung.

Alternativ oder zusätzlich kann das Überrohr auch als E-Muffe mit einer im Innenrohr angeordneten Heizvorrichtung ausgestattet sein, um eine Anbindung an das Prozessrohr zu ermöglichen.

Alternativ oder zusätzlich kann auch das Prozessrohr, analog zum Messrohr über eine Materialwulst und eine darin eingebettete Heizvorrichtung verfügen, um eine Anbindung mit einem Überrohr zu ermöglichen.

Alternativ oder zusätzlich kann die Materialverdickung aus einem Material gefertigt sein, welches ein Copolymer aus dem Material des Messrohres und eines weiteren Polymers ist, wobei das Copolymer aufgrund seiner Materialzusammensetzung leichter schmilzt als das Rohrmaterial des Messrohres. Dadurch wird das Rohrmaterial des Messrohres weniger stark beansprucht.

Zusätzlich kann das Messrohr 22 einen weiteren umlaufenden Materialstrang aufweisen, an welchem sich die Kunststoffschmelze der Materialwulst beim Einführen in das Überrohr oder die Prozessleitung sammelt.

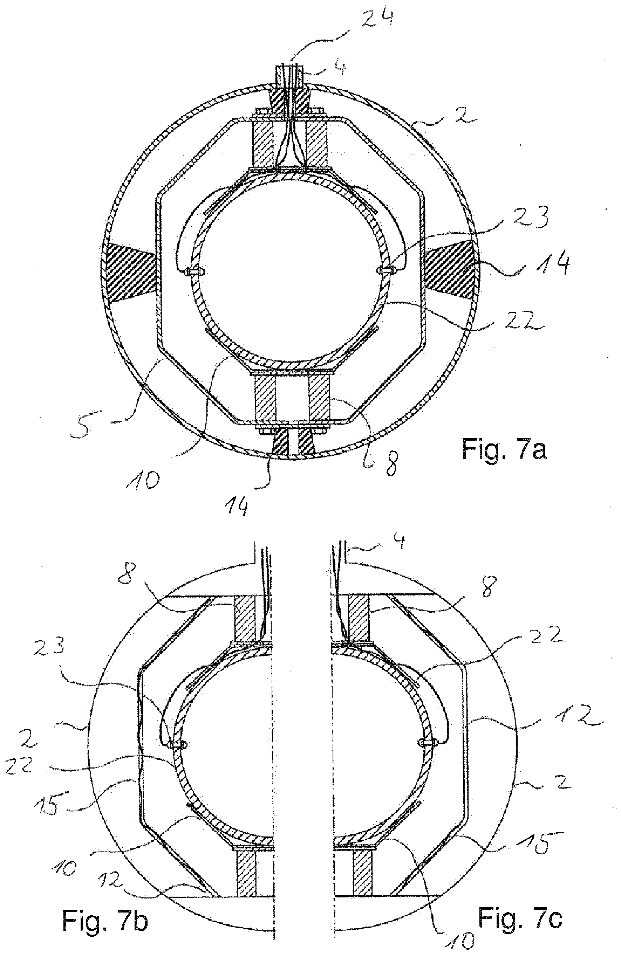

Fig. 7a-c zeigt verschiedene Varianten eine zusätzliche Fixierung des Rückführbleches 5 innerhalb der nutförmigen Auflagefläche 12 zu erreichen.

Eine Variante der Fixierung ist ein Abstützen der Rückführbleche durch Einbringen eines oder mehrerer Dämpfungskörper 14 einen Zwischenraum zwischen dem Gehäusemantel 2 und dem Rückführblech bzw. den Rückführblechen 5. Diese Dämpfungskörper 14 können vorzugsweise als elastische Körper ausgebildet sein, so dass die Rückstellbleche über die elastischen Rückstellkräfte der Dämpfungskörper in ihrer Position gehalten werden und Vibrationen des Rohrsystems zusätzlich abgefedert werden. Das Abstützen erfolgt dabei am Gehäusemantel.

Eine zweite in Fig. 7b und 7c erläuterte Variante besteht in einem Abstützen der Rückführbleche 5 innerhalb der Nut bzw. der nutförmigen Auflagefläche 12 durch Verspannen mittels eines Federelements. Eine Nut hat ja bekanntermaßen eine Oberseite und eine Unterseite. An einer dieser Seiten kann sich ein Federelement 15 abstützen und durch entsprechende Rückstellkräfte das Rückstellblech 5 gegen die gegenüberliegende Seite pressen. Ein entsprechendes Federelement kann vielfältig ausgebildet sein, z.B. wie in Fig. 7b als Bügel, Winkel, Keile oder wie in Fig. 7c als Federring, welches innerhalb der Nut angeordnet ist. Es kann auch ein federnder Vorsprung sein, welcher integral aus dem Rückführblech hervorsteht. Dadurch erfolgt ein Verspannen - also ein Festlegen innerhalb der Nut durch entgegenwirkende Rückstellkräfte

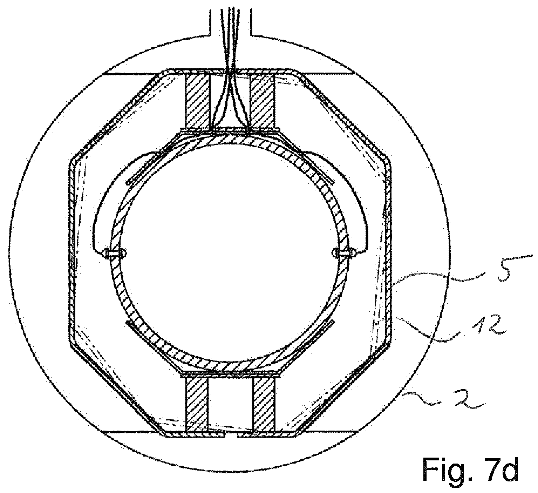

Eine weitere Alternative des Verspannens des Rückführbleches in der Nut wird in Fig. 7d beschrieben. Hier entwickelt das Federblech selbst Rückstellkräfte aufgrund einer gegenüber der Nut abweichenden Formgebung. Diese Formgebungsunterschiede bewirken ein Verkanten des Rückstellblechs 5 in der Nut 12 bzw. der nutförmigen Auflagefläche, wie es in Fig. 7d lediglich schematisch angedeutet wird. Selbstverständlich ist der Versatz von Nut 12 und Rückstellblechen 15 deutlich geringer. Auch hier wirken Rückstellkräfte aufgrund von Deformationsunterschieden.

### Bezugszeichenliste

- 1: Gehäuse
- 2: Gehäusemantel
- 3a, 3b: Gehäusedeckel
- 4: Anschlussstutzen
- 5: Rückführbleche
- 6: Spulenkörper
- 7: Durchführung für Messelektroden
- 8: Spule
- 9: Durchführung - Kabel
- 10: Polschuh
- 11: Spulenkörper Vorsprung
- 12: Nutförmige Auflagefläche
- 13: Erste Auflagefläche
- 14: Dämpfungskörper
- 15: Spannfeder
- 16: Verkantungsbereich
- 17: Materialwulst
- 18: Heizvorrichtung
- 19: Überrohr
- 20: Rohr einer Prozessleitung
- 21: Messsystem
- 22: Messrohr
- 23: Messelektroden
- 24: Elektrodenkabel

## Patentansprüche

1. Magnetisch-induktives Durchflussmessgerät umfassend:
- zumindest ein Messrohr (22),
- zwei diametral am Messrohr (22) gegenüberstehende Spulensysteme, wobei die Spulensysteme über Rückführbleche (5) miteinander verbunden sind,
- Messelektroden (23) zum Abgreifen einer induzierten Spannung, und
- ein Kunststoffgehäuse (1), umfassend zumindest zwei Kunststoff-Formteile,
wobei zumindest ein Kunststoff-Formteil einen Gehäusemantel (2) bildet und ein zweites Kunststoff-Formteil einen Gehäusedeckel (3a, 3b) bildet, welcher Gehäusedeckel (3a, 3b) das Messrohr (22) umgreift,
wobei der Gehäusedeckel (3a, 3b) scheibenförmig ausgebildet ist,
**dadurch gekennzeichnet,**
**dass** der Gehäusedeckel (3a, 3b) zumindest eine nutförmige Auflagefläche (12) aufweist, zum Abstützen der Spulensysteme am Gehäusedeckel (3a, 3b),
wobei die Spulensysteme am Gehäusedeckel (3a, 3b) über die Rückführbleche (5) an dieser nutförmigen Auflagefläche (12) abgestützt sind, und
**dass** diese nutförmige Auflagefläche ausgebildet ist zur teilweisen Aufnahme von Rückführblechen (5) und
**dass** die Kunststoff-Formteile miteinander verschweißt sind.

2. Magnetisch-induktives Durchflussmessgerät nach Anspruch 1, **dadurch gekennzeichnet, dass** der Gehäusedeckel zusätzlich zur nutförmigen Auflagefläche (12) eine erste Auflagefläche (13) aufweist, und dass jedes der Spulensysteme zumindest einen Polschuh (10) und eine Spule (8) mit einem Spulenkörper (6) und einem Spulenkern umfasst und dass jedes der Spulensysteme sich an der ersten Auflagefläche (13) über zumindest eines der vorgenannten Bauteile des Spulensystems abstützt.

3. Magnetisch-induktives Durchflussmessgerät nach einem der vorhergehenden Ansprüchen, **dadurch gekennzeichnet, dass** das Rückführblech gegen die nutförmige Auflagefläche (12) verspannt ist.

4. Magnetisch-induktives Durchflussmessgerät nach einem der vorhergehenden Ansprüchen, **dadurch gekennzeichnet, dass** das magnetisch-induktive Durchflussmessgerät Mittel zum Abstützen des Rückführbleches gegen Vibrationen am Gehäusemantel (2) aufweist.

5. Magnetisch-induktives Durchflussmessgerät nach einem der vorhergehenden Ansprüchen, **dadurch gekennzeichnet, dass** Leerräume innerhalb des Kunststoffgehäuses (1) des magnetisch-induktive Durchflussmessgerät mit einer Kunststoffmasse, vorzugsweise Kunststoffschaum, gefüllt werden.

6. Magnetisch-induktives Durchflussmessgerät nach einem der Ansprüche 2-5, **dadurch gekennzeichnet, dass** der Spulenkörper (6) einen Vorsprung (11) aufweist, welcher sich an der ersten Auflagefläche (13) des Gehäusedeckels (3a, 3b) abstützt.

## Claims

1. Electromagnetic flowmeter comprising:
- at least one measuring tube (22),
- two coil systems diametrically opposed on the measuring tube (22), wherein the coil systems are interconnected by means of reversing sheets (5)
- measuring electrodes (23) designed to measure an induced voltage, and
- a plastic housing (1), consisting of at least two plastic molded parts,
wherein at least one plastic molded part forms a housing jacket (2) and a second plastic molded part forms a housing cover (3a, 3b), said housing cover (3a, 3b) surrounding the measuring tube (22),
wherein the housing cover (3a, 3b) has a disk-like design,
**characterized in that**
the housing cover (3a, 3b) has at least one groove-shaped support surface (12), which is designed to support the coil systems on the housing cover (3a, 3b),
wherein the coil systems on the housing cover (3a, 3b) are supported on this groove-shaped support surface (12) via the reversing sheets (5), and
**in that** said groove-shaped support surface is designed to partially accommodate reversing sheets (5) and
**in that** the plastic molded parts are welded together.

2. Electromagnetic flowmeter as claimed in Claim 1,
**characterized in that,** in addition to the groove-shaped support surface (12), the housing cover has a first support surface (13), and **in that** each of the coil systems comprises at least a pole shoe (10) and a coil (8) with a coil body (6) and a coil core, and **in that** each of the coil systems is supported on the first support surface (13) via at least one of the aforementioned parts of the coil system.

3. Electromagnetic flowmeter as claimed in one of the previous claims,
**characterized in that** the reversing sheet is clamped against the groove-shaped support surface (12).

4. Electromagnetic flowmeter as claimed in one of the previous claims,
**characterized in that** the electromagnetic flowmeter comprises a means to support the reversing sheet against vibrations at the housing jacket (2).

5. Electromagnetic flowmeter as claimed in one of the previous claims,
**characterized in that** the empty spaces inside the plastic housing (1) of the electromagnetic flowmeter are filled with a plastic compound, preferably plastic foam.

6. Electromagnetic flowmeter as claimed in one of the Claims 2 to 5,
**characterized in that** the coil body (6) features a projection (11), said projection being supported on the first support surface (13) of the housing cover (3a, 3b).

## Revendications

1. Débitmètre magnéto-inductif comprenant :
- au moins un tube de mesure (22),
- deux systèmes de bobine diamétralement opposés sur le tube de mesure (22), les systèmes de bobine étant reliés entre eux au moyen de tôles de retour (5)
- des électrodes de mesure (23) destinées au prélèvement d'une tension induite, et
- un boîtier en matière plastique (1), constitué de deux pièces formées en matière plastique,
au moins une pièce formée en matière plastique constituant une enveloppe de boîtier (2) et une deuxième pièce formée en matière plastique constituant un couvercle de boîtier (3a, 3b), lequel couvercle de boîtier (3a, 3b) entoure le tube de mesure (22),
le couvercle de boîtier (3a, 3b) étant réalisé en forme de disque, **caractérisé**
**en ce que** le couvercle de boîtier (3a, 3b) présente au moins une surface de support (12) en forme de rainure, laquelle est destinée à supporter les systèmes de bobine sur le couvercle de boîtier (3a, 3b),
les systèmes de bobine sur le couvercle de boîtier (3a, 3b) étant supportés via les tôles de retour (5) au niveau de cette surface de support (12) en forme de rainure, et
**en ce que** cette surface de support en forme de rainure est conçue pour le support partiel des tôles de retour (5) et
**en ce que** les pièces formées en matière plastique sont soudées entre elles.

2. Débitmètre magnéto-inductif selon la revendication 1,
**caractérisé en ce que** le couvercle de boîtier présente, outre la surface de support (12) en forme de rainure, une première surface de support (13), et **en ce que** chacun des systèmes de bobine comprend au minimum une pièce polaire (10) et une bobine (8) avec un corps de bobine (6) et un noyau de bobine, et **en ce que** chacun des systèmes de bobine s'appuie sur la première surface de support (13) par le biais d'au moins l'un des composants précités du système de bobine.

3. Débitmètre magnéto-inductif selon l'une des revendications précédentes,
**caractérisé en ce que** la tôle de retour est serrée contre la surface de support (12) en forme de rainure.

4. Débitmètre magnéto-inductif selon l'une des revendications précédentes,
**caractérisé en ce que** le débitmètre magnéto-inductif comprend des moyens pour supporter la tôle de retour contre les vibrations sur l'enveloppe de boîtier (2).

5. Débitmètre magnéto-inductif selon l'une des revendications précédentes,
**caractérisé en ce que** les espaces vides à l'intérieur du boîtier en matière plastique (1) du débitmètre magnéto-inductif sont remplis d'une masse de matière plastique, de préférence d'une mousse de matière plastique.

6. Débitmètre magnéto-inductif selon l'une des revendications 2 à 5,
**caractérisé en ce que** le corps de bobine (6) présente une saillie (11), laquelle saillie s'appuie sur la première surface de contact (13) du couvercle de boîtier (3a, 3b).
